# FASCICULE DE BREVET EUROPEEN

(11) **EP 1 044 511 B1**
(45) Date de publication et mention de la délivrance du brevet: **07.05.2003**
(21) Numéro de dépôt: 98964550.2
(22) Date de dépôt: 29.12.1998
(51) Int. Cl.: H04B 1/38, H01Q 1/24

(54) **DISPOSITIF DE RADIOCOMMUNICATION MOBILE A ANTENNE POUVANT PRENDRE PLUSIEURS POSITIONS**
MOBILFUNKGERÄT MIT VERSTELLBARER ANTENNE
MOBILE RADIO COMMUNICATION DEVICE WITH ANTENNA CAPABLE OF TAKING UP DIFFERENT POSITIONS

(30) Priorité: 29.12.1997 FR 9716840
(43) Date de publication de la demande: 18.10.2000
(73) Titulaire: Wavecom, 92130 Issy-les-Moulineaux (FR)
(72) Inventeur: ALARD, Michel, F-75004 Paris (FR)
(74) Mandataire: Vidon, Patrice
(86) Numéro de dépôt international: FR9802914
(87) Numéro de publication internationale: WO99034524

(56) Documents cités:
- EP-A- 0 611 199
- EP-A- 0 644 607
- WO-A-97/26712

## Description

Le domaine de l'invention est celui de la radiocommunication mobile. Plus précisément, l'invention concerne l'amélioration de la qualité de la transmission, en réception et en émission, dans un téléphone mobile. L'invention s'applique à tous les systèmes de communication, en particulier les communications numériques, et notamment aux systèmes mettant en oeuvre des communications par voie satellitaire.

Classiquement, les téléphones mobiles sont équipés d'une antenne de type filaire, qui peut être fixe ou montée coulissante à l'intérieur du boîtier du téléphone, afin de permettre une réduction de l'encombrement, lorsque le téléphone n'est pas utilisé.

Pour les communications par satellites, et par exemple dans le cadre du système ICO, la mise en oeuvre de la polarisation circulaire impose généralement l'utilisation d'antennes hélicoïdales de dimensions relativement importantes.

Alternativement, pour réduire l'encombrement des antennes, on a envisagé des formes planes. On peut ainsi mettre en oeuvre des antennes planes, du type imprimé sur un substrat, par exemple en céramique. Cette technique présente en outre l'avantage de permettre l'intégration dans l'antenne de composants (moyens de filtrage, d'amplification,...).

Toutefois, l'inventeur de la présente demande a identifié un problème important, dans le cadre d'une utilisation de telles antennes dans un téléphone mobile. En effet, pour qu'une antenne, notamment une antenne plane, offre de bonnes performances en réception et en émission, son pointage vers le satellite doit être précis : il est nécessaire qu'elle se trouve dans un plan perpendiculaire à l'axe de la transmission, ou au moins approximativement dans ce plan.

En d'autres termes, et dans le cadre d'une communication par satellite, il faut que l'antenne se trouve dans un plan sensiblement parallèle au sol.

Il n'est pas aisé de répondre à cette exigence dans le cas d'un téléphone mobile, car le plan défini par l'antenne varie fortement selon que l'utilisateur du téléphone soit droitier ou gaucher.

L'invention a notamment pour objectif d'apporter une solution simple et efficace à ce problème.

Plus précisément, un objectif de l'invention est de fournir un téléphone mobile à antenne plane, qui soit aisément et, de préférence, directement utilisable, que l'utilisateur soit droitier ou gaucher.

La demande de brevet EP-A-0 611 199 décrit un dispositif selon le préambule de la revendication 1. Selon ce document on propose un radiotelephone portatif dont l'antenne peut être fixée dans deux positions différentes selon que l'appareil est utilisé par un droitier ou un gaucher.

L'invention a pour objectif de fournir un téléphone mobile à antenne plate, qui offre une qualité d'émission et de réception optimisée, en toutes conditions d'utilisation.

Un autre objectif de l'invention est de fournir un tel téléphone mobile, qui soit simple à réaliser et à mettre en oeuvre, et qui présente en conséquence un coût de revient acceptable.

L'invention a encore pour objectif de fournir un tel téléphone mobile, qui soit d'un faible encombrement.

Ces objectifs, ainsi que d'autres qui apparaîtront par la suite, sont atteints selon l'invention à l'aide d'un dispositif de radiocommunication mobile, comprenant une antenne montée mobile tel que décrit dans la partie caractérisante de la revendication 1.

D'autres modes de réalisation préférentiel de l'invention, sont donnés dans les revendications dépendantes 2-8.

D'autres caractéristiques et avantages de l'invention apparaîtront plus clairement à la lecture de la description suivante d'un mode de réalisation préférentiel de l'invention, donnée à titre de simple exemple illustratif et non limitatif, et des figures annexées, parmi lesquelles :
- la figure 1 illustre un téléphone mobile selon l'invention, dans l'état fermé ;
- la figure 2 illustre le téléphone mobile de la figure 1, en cours de passage de l'état fermé à l'état déployé ;
- la figure 3 présente le téléphone mobile des figures 1 et 2 dans l'état déployé, en position pour droitier ;
- la figure 4 présente en détail les moyens de mise en place de l'antenne du téléphone des figures 1 à 3 (dans l'état déployé) ;
- la figure 5 illustre les moyens de mise en place de la figure 4, l'antenne étant dans l'état fermé.

Comme déjà mentionné, l'invention concerne les téléphones mobiles équipés d'une antenne, et notamment d'une antenne plane. De tels téléphones sont en particulier destinés aux communications par satellites.

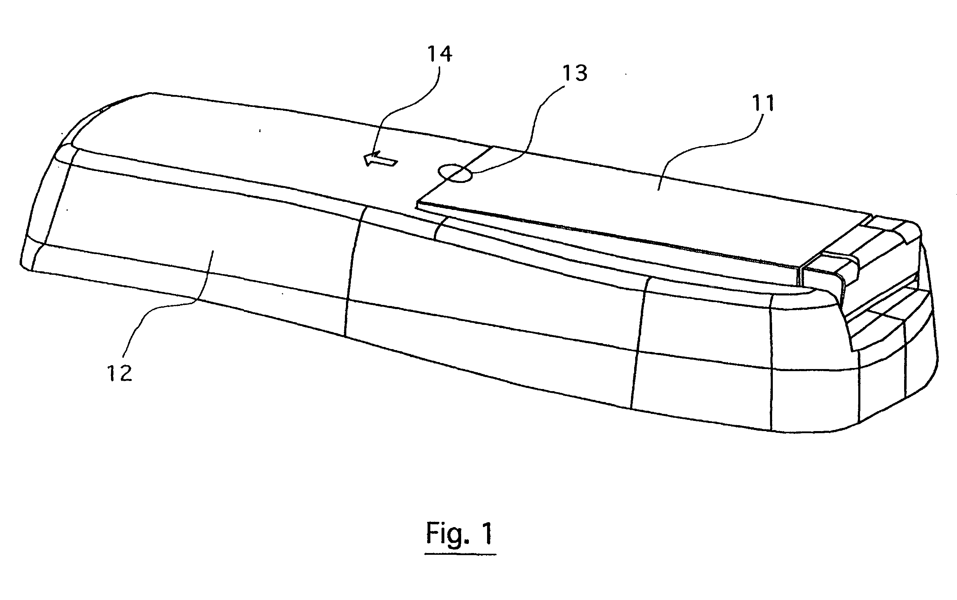

Dans le mode de réalisation illustré par les figures 1 à 3, le téléphone est intégré dans un boîtier, ou coque, 12. L'antenne plane est montée dans une chape 11 (dans la présente description, ainsi que dans les revendications, on entend par antenne l'ensemble formé par l'antenne proprement dite et la chape, par souci de simplification).

L'antenne peut avantageusement comprendre, sur son substrat, divers composants, tels que des filtres ou des moyens d'amplification.

Dans l'état fermé, c'est-à-dire lorsque le téléphone n'est pas utilisé, l'antenne 11 est ramené à l'intérieur du boîtier 12, dans un logement prévu à cet effet sur la face opposée à la face équipée du clavier de numérotation. Des moyens de verrouillage 13 maintiennent l'antenne 11 dans cette position. L'ensemble ainsi formé est particulièrement compact (aucune antenne classique ne dépassant du boîtier).

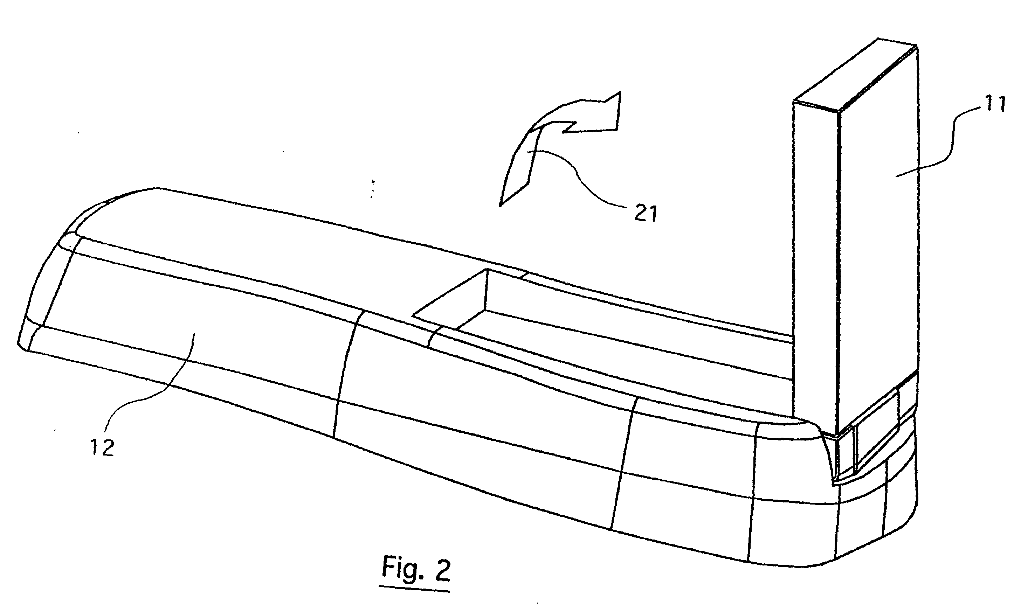

En actionnant les moyens de verrouillage 13 dans le sens de la flèche de libération 14, l'antenne 11 se déploie (21) automatiquement autour d'un axe correspondant sensiblement à la partie supérieure du boîtier 12, de façon à former un angle de l'ordre de 90° avec le plan défini par l'antenne dans l'état fermé (figure 2).

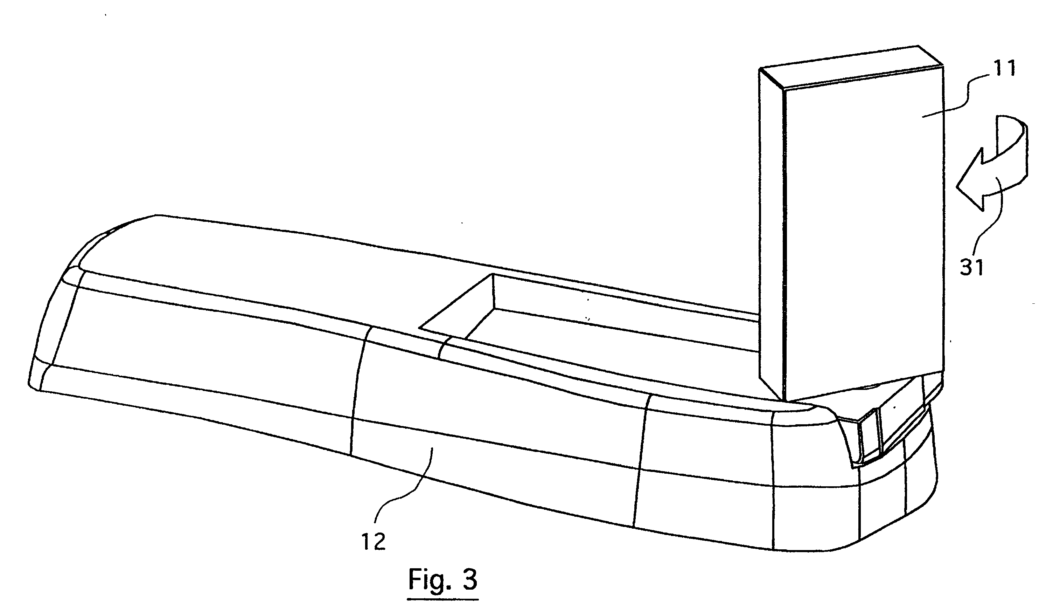

Ensuite, et toujours automatiquement, l'antenne pivote (31) autour d'un axe sensiblement perpendiculaire au plan défini par l'antenne dans l'état fermé (figure 3). Ce pivotement 31 est réalisé soit dans le sens trigonométrique, soit dans le sens anti-trigonométrique, selon que l'utilisateur est droitier ou gaucher.

L'angle de pivotement est avantageusement de l'ordre de 45°, ce qui permet d'obtenir, lorsque le haut-parleur de téléphone est appliqué contre l'oreille et son microphone placé près de la bouche, selon une utilisation normale, un positionnement de l'antenne sensiblement parallèle avec le sol, et donc de garantir un pointage optimal de l'antenne avec les satellites.

Les moyens de contrôle du pivotement sont conçus de façon que l'antenne prenne systématiquement la position pour droitier, lorsque l'utilisateur est droitier (et réciproquement). Il est bien sûr possible de changer cette position. En d'autres termes, ces moyens de contrôle du pivotement comprennent des moyens de mémorisation, modifiable, de la position préférée d'utilisation.

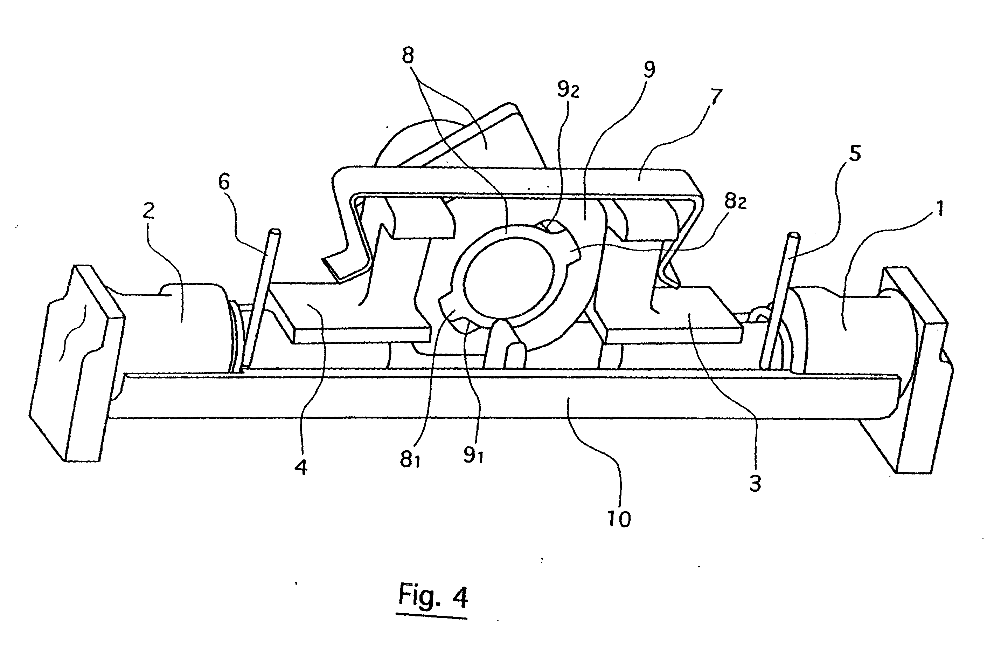

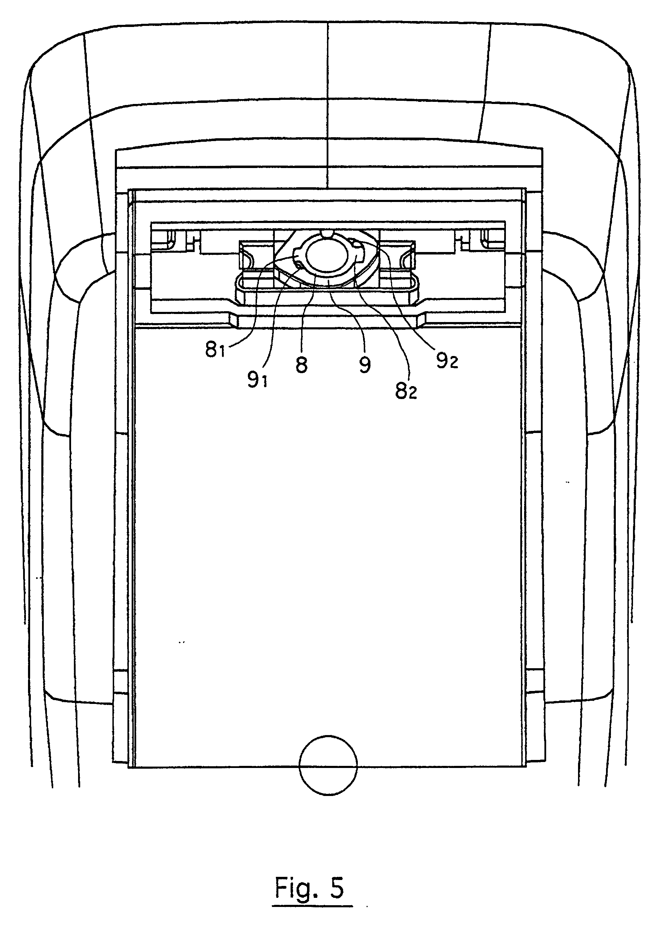

Avantageusement, l'ensemble des moyens de mise en place de l'antenne sont mécaniques. Un mode de réalisation particulièrement avantageux de ces moyens est illustré par les figures 4 et 5.

Sur la figure 4, on a extrait du boîtier du téléphone les éléments assurant la mise en place de l'antenne.

Ces moyens comprennent une came 9, encadrée de deux pistons 3 et 4, contraints par une lame ressort 7 (moyens de rappel). L'antenne, montée sur son axe 8, est solidaire de la came 9.

Les pistons 3 et 4 sont mobiles :
- en translation, sous le contrôle de la lame ressort,
- en rotation, par rapport à l'axe défini par les logements fixes 1 et 2, sous le contrôle de ressorts de relevage 5 et 6.

En position fermée (figures 1 et 5), les pistons 3 et 4 pénètrent respectivement à l'intérieure des logements 1 et 2. L'antenne étant ramenée dans le plan du boîtier, la came 9 écarte ces pistons 3 et 4 (et tend ainsi la lame ressort 7).

Comme cela apparaît sur la figure 5, lorsque l'antenne se trouve dans le plan du boîtier, la came 9 est positionnée de façon que sa plus grande largeur ne soit pas exactement parallèle au boîtier, mais au contraire légèrement décalée. Ainsi, sous l'action des pistons 3 et 4, le mouvement de la came 9 sera systématiquement dans le sens voulu (les pistons cherchant à se rapprocher, et ne pouvant pas s'éloigner l'un de l'autre).

L'axe 8 de l'antenne peut prendre deux positions par rapport à la came 9, grâce aux logements 9₁ et 9₂ dans lesquels peuvent se déplacer deux butées 8₁ et 8₂ solidaires de l'axe 8. Selon que les butées sont placées dans l'une ou l'autre des position, la came 9 est décalée dans un sens ou dans l'autre, par rapport au boîtier, lorsque l'antenne est repliée.

En conséquence, le pivotement de l'antenne a lieu, selon le cas, à droite ou à gauche. Il suffit de forcer manuellement sur l'antenne pour modifier la position des butées 8₁ et 8₂, et donc la mise en place de l'antenne en position pour droitier ou pour gaucher.

Le fonctionnement de l'ensemble peut donc se résumer de la façon suivante :
- lorsque le verrou 13 libère l'antenne, celle-ci et sa chape 10 basculant à 90° par rapport au boîtier 12 sous l'action des ressorts de relevage contraints 5 et 6;
- pendant le mouvement de rotation 21, la chape 10 entraîne les pistons 3 et 4 en rotation. Ces derniers se dégagent des logements fixes 1 et 2, au niveau de leur point de contact hélicoïdal ;
- les pistons 3 et 4, contraints par la lame ressort 7, font pivoter la came 9, qui entraîne l'axe 8 de l'antenne. Celle-ci pivote de 45°.

L'ensemble de ces mouvements est automatique.

Le pivotement à 45° de l'antenne est mémorisé dans un sens ou dans l'autre, par le système des butées 81 et 82. Comme indiqué précédemment, il faut faire pivoter manuellement l'antenne sur son axe de façon à entraîner la came 9 au-delà de son point d'équilibre et la faire basculer dans l'autre sens, sous l'effet de la pression des pistons 3 et 4 contraints par la lame ressort 7.

Dans ce cas, le came 9 change de position par rapport à l'axe 8 de l'antenne, et mémorise ainsi que les prochaines ouvertures auront lieu automatiquement à - 45°.

Le retour dans l'état fermé est également automatique. Il suffit de ramener manuellement l'antenne 11 dans son logement, jusqu'à ce que les moyens de verrouillage 13 se mettent en place.

De nombreuses variantes à ce mode de réalisation peuvent être envisagées. La cinématique peut être modifiée, le déploiement et le pivotement s'effectuant par exemple simultanément, et non plus successivement.

Les moyens mécaniques de contrôle du déploiement et/ou du pivotement peuvent également être adaptés (autres moyens d'action sur une came, autre forme de came, autre type de moyens de rappel,...).

Les moyens de mémorisation de la position préférée peuvent comprendre, au lieu d'une came à deux positions possibles dans l'état fermé, un moyen manuel, tel qu'un curseur à deux positions (droite-gauche) qui contrôle le pivotement de l'antenne, par exemple en déplaçant un ressort ou un élément de commande.

Selon un autre mode de réalisation, l'antenne se met automatiquement en place selon l'orientation optimale, sous l'action ou la commande de moyens spécifiques, tels que des moyens capables de repérer le plan formé localement par le sol, l'axe de la transmission avec un satellite ou l'axe passant par le centre de la terre.

## Revendications

1. Dispositif de radiocommunication mobile comprenant une antenne plane (11) montée mobile sur le boîtier (12) dudit dispositif de radiocommunication de façon qu'elle puisse être orientée de façon optimale, ou quasi-optimale, par rapport à un axe de transmission de signal, que l'utilisateur soit droitier ou gaucher, **caractérisé en ce que** ladite antenne (11) est mobile entre :
- un état fermé, dans lequel ladite antenne (11) est ramenée sensiblement parallèle à une face principale du boîtier (12) dudit dispositif :
- un état déployé, dans lequel ladite antenne (11) est sensiblement perpendiculaire à ladite face principale du boîtier (12) dudit dispositif et peut prendre l'une ou l'autre de deux positions fixes :
- une première position fixe pour utilisateur droitier ;
- une seconde position fixe pour utilisateur gaucher,
le passage dudit état fermé de ladite entenne (11) à l'une desdites positions fixes dudit état déployé de ladite antenne (11) étant décomposable en deux mouvements :
- une première rotation d'ouverture de l'antenne (11), par rapport à un premier axe de rotation ;
- une seconde rotation d'orientation de l'antenne (11), par rapport à un second axe de rotation perpendiculaire audit premier axe de rotation et normal, en état depolyé 10 l'intenne (11), à la face principale du boîtier (12) dudit dispositif, de façon à prendre l'une ou l'autre desdites positions fixes.

2. Dispositif de radiocommunication mobile selon la revendication 1, **caractérisé en ce que** l'orientation optimale, ou quasi-optimale, correspond à un plan sensiblement parallèle au sol, lorsque la tête dudit utilisateur est droite.

3. Dispositif de radiocommunication mobile selon l'une quelconque des revendications 1 et 2, **caractérisé en ce qu'**il comprend des moyens de verrouillage (13) de ladite antenne (11) dans ledit état fermé.

4. Dispositif de radiocommunication mobile selon la revendication 3, **caractérisé en ce que** le déverrouillage desdits moyens de verrouillage (13) entraîne la mise en place automatique de ladite antenne (11) dans une position déployée pour droitier ou une position déployée pour gaucher.

5. Dispositif de radiocommunication mobile selon l'une quelconque des revendications 1 à 4, **caractérisé en ce qu'**il comprend des moyens de mémorisation (8,9;8₁,8₂,9₁,9₂) d'une position préférée, ladite position pour droitier ou ladite position pour gaucher.

6. Dispositif de radiocommunication mobile selon la revendication 5, **caractérisé en ce que** ladite antenne (11) est montée sur une came (9) pouvant prendre deux positions de came (9₁,9₂) lorsque ladite antenne (11) est dans l'état fermé, une première position de came entraînant la mise en place dans la position déployée pour droitier, et une seconde position de came entraînant la mise en place dans la position déployée pour gaucher.

7. Dispositif de radiocommunication mobile selon la revendication 6, **caractérisé en ce que** ladite came (9) est entraînée par deux pistons (3,4) agissant sur ladite came sous l'effet de moyens de rappel (7) lors du passage de l'état fermé à l'état déployé.

8. Dispositif de radiocommunication mobile selon l'une quelconque des revendications 6 et 7, **caractérisé en ce que** ladite antenne (11) est montée sur un axe (8) solidaire de ladite came (9), pouvant prendre deux positions distinctes (8₁,8₂) par rapport à ladite came (9).

## Claims

1. Mobile radio-communication device comprising a flat antenna (11) which is fitted such as to be mobile on the case (12) of the said radio-communication device such that it can be oriented optimally, or quasi-optimally, relative to a signal transmission axis, whether the user is left-handed or right-handed, **characterised in that** the said antenna (11) is mobile between:
- a closed state, in which the said antenna (11) is returned substantially parallel to a main surface of the case (12) of the said device; and
- a deployed state, in which the said antenna (11) is substantially perpendicular to the said main surface of the case (12) of the said device and can assume one or the other of two fixed positions:
- a first fixed position for a right-handed user;
and
- a second fixed position for a left-handed user, the transition from the said closed state of the said antenna (11) to one of the said fixed positions of the said deployed state of the said antenna (11) being able to be broken down into two movements:
- a first rotation of opening of the antenna (11) relative to a first axis of rotation;
- a second rotation of orientation of the antenna (11) relative to a second axis of rotation which is perpendicular to the said first axis of rotation and is perpendicular, in the deployed state, to the main surface of the case (12) of the said device, such as to assume one or the other of the said fixed positions.

2. Mobile radio-communication device according to claim 1, **characterised in that** the optimal, or quasi-optimal orientation corresponds to a plane which is substantially parallel to the ground, when the head of the said user is straight.

3. Mobile radio-communication device according to claim 1 or claim 2, **characterised in that** it comprises means (13) for locking the said antenna (11) in the said closed state.

4. Mobile radio-communication device according to claim 3, **characterised in that** unlocking of the said means (13) for locking gives rise to automatic putting into place of the said antenna (11) in a position deployed for a right-handed person or a position deployed for a left-handed person.

5. Mobile radio-communication device according to any one of claims 1 to 4, **characterised in that** it comprises means (8,9;8₁,8₂,9₁,9₂) for storage of a preferred position, i.e. the said position for a right-handed person or the said position for a left-handed person.

6. Mobile radio-communication device according to claim 5, **characterised in that** the said antenna (11) is fitted on a cam (9) which can assume two cam positions (9₁,9₂) when the said antenna (11) is in the closed state, a first cam position giving rise to putting into place in the position deployed for a right-handed person, and a second cam position giving rise to putting into place in the position deployed for a left-handed person.

7. Mobile radio-communication device according to claim 6, **characterised in that** the said cam (9) is driven by two pistons (3,4) which act on the said cam under the effect of means (7) for return during transition from the closed state to the deployed state.

8. Mobile radio-communication device according to claim 6 or claim 7, **characterised in that** the said antenna (11) is fitted onto a shaft (8) which is integral with the said cam (9), and can assume two distinct positions (8₁,8₂) relative to the said cam (9).

## Patentansprüche

1. Mobile Funkverbindungsvorrichtung, die eine ebene Antenne (11) aufweist, welche beweglich auf das Gehäuse (12) dieser Funkverbindungsvorrichtung angebracht ist, so dass sie sich optimal oder quasi-optimal gegenüber einer Signalsendeachse ausrichten lässt, unabhängig davon, ob der Benutzer Rechtsoder Linkshänder ist, **dadurch gekennzeichnet, dass** die Antenne (11) zwischen den folgenden Zuständen beweglich ist:
- einem geschlossenen Zustand, bei dem die Antenne (11) in etwa parallel zu einer Hauptfläche des Gehäuses (12) der Funkvorrichtung liegt;
- einem entfalteten Zustand, bei dem die Antenne (11) in etwa senkrecht zur erwähnten Hauptfläche des Gehäuses (12) der Vorrichtung steht und eine von zwei feststehenden Positionen einnehmen kann:
- einer ersten feststehenden Position für Benutzer, die Rechtshänder sind;
- einer zweiten feststehenden Position für Benutzer, die Linkshänder sind,
wobei der Übergang vom geschlossenen Zustand der Antenne (11) zu einer der feststehenden Positionen des entfalteten Zustandes der Antenne (11) sich in zwei Bewegungen zerlegen lässt:
- eine erste Öffnungsdrehung der Antenne (11) im Verhältnis zu einer ersten Drehachse;
- eine zweite Orientierungsdrehung der Antenne (11) im Verhältnis zu einer zur ersten Drehachse senkrechten zweiten Drehachse, die außerdem im entfalteten Zustand der Antenne (11) senkrecht zur Hauptfläche des Gehäuses (12) der Vorrichtung steht, um eine der beiden erwähnten festen Positionen einnehmen zu können.

2. Mobile Funkverbindungsvorrichtung nach Anspruch 1, **dadurch gekennzeichnet, dass** die optimale oder quasi-optimale Ausrichtung einer in etwa dem Boden parallelen Ebene entspricht, wenn der Kopf des Benutzers gerade steht.

3. Mobile Funkverbindungsvorrichtung nach einem der Ansprüche 1 und 2, **dadurch gekennzeichnet, dass** sie Mittel zum Verriegeln (13) der Antenne (11) in dem geschlossenen Zustand aufweist.

4. Mobile Funkverbindungsvorrichtung nach Anspruch 3, **dadurch gekennzeichnet, dass** das Entriegeln der Verriegelungsmittel (13) die automatische Einstellung der Antenne (11) in eine entfaltete Position für Rechtshänder oder in eine entfalteten Position für Linkshänder bewirkt.

5. Mobile Funkverbindungsvorrichtung nach einem der Ansprüche 1 bis 4, **dadurch gekennzeichnet, dass** sie über Mittel (8, 9; 8₁, 8₂; 9₁, 9₂) zum Speichern einer bevorzugten Position verfügt, nämlich die Position für Rechtshänder bzw. die Position für Linkshänder.

6. Mobile Funkverbindungsvorrichtung nach Anspruch 5, **dadurch gekennzeichnet, dass** die Antenne (11) auf einer Nocke (9) montiert ist, die zwei Positionen (9₁, 9₂) aufweist, wenn sich die Antenne (11) in der geschlossenen Position befindet, wobei eine erste Nockenposition das Einrasten in der entfalteten Position für Rechtshänder und eine zweite Nockenposition das Einrasten in der entfalteten Position für Linkshänder bewirkt.

7. Mobile Funkverbindungsvorrichtung nach Anspruch 6, **dadurch gekennzeichnet, dass** die Nocke (9) durch zwei Kolben (3, 4) mitgenommen wird, welche beim Übergang vom geschlossenen in den entfalteten Zustand unter dem Einfluss von Rückholmittel (7) auf die Nocke wirken.

8. Mobile Funkverbindungsvorrichtung nach einem der Ansprüche 6 und 7, **dadurch gekennzeichnet, dass** die Antenne (11) auf einer Welle (8) angebracht ist, die mit der Nocke (9) verbunden ist und die zwei verschiedene Positionen (8₁, 8₂) im Verhältnis zu Nocke (9) einnehmen kann.
